# EUROPÄISCHE PATENTSCHRIFT

(11) **EP 3 307 119 B1**
(45) Veröffentlichungstag und Bekanntmachung des Hinweises auf die Patenterteilung: **29.12.2021**
(21) Anmeldenummer: 16724028.2
(22) Anmeldetag: 19.05.2016
(51) Int. Cl.: A47J 31/60

(54) **VERFAHREN ZUR REINIGUNG VON AUTOMATEN FÜR DIE HERSTELLUNG VON HEISSGETRÄNKEN UND DAMIT AUSGERÜSTETER AUTOMAT**
METHOD FOR CLEANING VENDING MACHINES FOR PRODUCING HOT BEVERAGES AND VENDING MACHINE FITTED THEREWITH
PROCÉDÉ DE NETTOYAGE D'AUTOMATES DESTINÉS À LA PRÉPARATION DE BOISSONS CHAUDES ET AUTOMATE AINSI ÉQUIPÉ

(30) Priorität: 28.05.2015 DE 102015108438
(43) Veröffentlichungstag der Anmeldung: 18.04.2018
(73) Patentinhaber: BWT AG, 5310 Mondsee (AT)
(72) Erfinder: JOHANN, Jürgen, 69226 Nußloch (DE)
(74) Vertreter: Friderichs, Gunther
(86) Internationale Anmeldenummer: PCT/EP2016/061233
(87) Internationale Veröffentlichungsnummer: WO 2016/188845

(56) Entgegenhaltungen:
- WO-A1-2015/059213
- DE-A1-102006 029 105

## Beschreibung

### Gebiet der Erfindung

Die Erfindung betrifft eine Vorrichtung zur Reinigung von Automaten für die Herstellung von Heißgetränken, einen damit ausgerüsteten Automaten zu Heißgetränkeherstellung sowie ein Verfahren zur Reinigung eines Automaten für die Zubereitung von Heißgetränken.

### Hintergrund der Erfindung

Automaten für die Zubereitung von Heißgetränken, insbesondere sogenannten Kaffeevollautomaten, finden seit vielen Jahren Verwendung sowohl in Privathaushalten als auch im gewerblichen Bereich wie beispielsweise Gaststätten oder Hotels. Trotz dieser hohen Verbreitung gibt es allerdings weiterhin bedeutende Probleme insbesondere mit der Reinigung von solchen Automaten. Neben dem Befall mit Pilzen, der besonders für Kaffeevollautomaten von Bedeutung ist, da Pilze durch die verwendeten Kaffeebohnen in den Automaten eingebracht werden kann, können auch Probleme mit bakteriellen Verunreinigungen auftreten. Weitere Schwierigkeiten bestehen darüber hinaus in der Reinigung von Zuleitungen von Flüssigkeiten bzw. in der Reinigung sonstiger Bauteile, die mit Flüssigkeit gefüllt sind, beispielsweise dem Wasserbehälter oder Tank oder Behälter für sonstige Flüssigkeiten wie beispielsweise Milch. So kommt es hier immer wieder zu störenden Ablagerungen, die ebenfalls zum Nährboden für Keime werden können. Zwar werden in solche Automaten häufig Mittel zur Wasserenthärtung, beispielsweise in Form von Kartuschen zum Ionenaustausch, gegeben, dennoch führt auch dies nicht zu einem vollständigen Verschwinden von Ablagerungen.

Zum ordnungsgemäßen Gebrauch eines solchen Automaten zur Heißgetränkeherstellung, beispielsweise eines Kaffeevollautomaten, gehören damit regelmäßig durchgeführte Reinigungen, wobei zumeist unterschiedliche Reinigungsprogramme, beispielsweise ein Programm zur Entkalkung wasserführender oder wasserhaltiger Bauteile, eines zur Entfettung der sogenannten Brüheinheit oder eines zur Reinigung milchführender Systeme. Hierzu existiert eine große Auswahl von Reinigungsmitteln, die handelsüblich in unterschiedlichen Formen angeboten werden können, beispielsweise:
- als flüssiger Reiniger oder
- in Tablettenform (sogenannte Tabs).

Auch möglich ist beispielsweise das Vorliegen in Kapselform, falls es sich bei dem Automaten zur Heißgetränkeherstellung um eine sogenannte Kapselmaschine handelt, wie beispielsweise in der DE 10 2010 027 523 A1 beschrieben.

Die internationale Patentanmeldung WO 2015/059213 A1 beschreibt eine Entkalkungsvorrichtung zur Entkalkung eines hydraulischen Kreislaufs eines Automaten zur Bereitung von Heißgetränken.

Die Offenlegungsschrift DE 10 2013 106 304 A1 betrifft ein Verfahren zum Betreiben eines Getränkebereiters mit einem

Strömungsleitsystem zum Durchleiten von Fluiden zur Durchführung einer automatischen Entkalkung.

Die Offenlegungsschrift DE 10 2013 105 162 A1 beschreibt ein Strömungsleitungssystem für einen Getränkebereiter mit Reinigungsvorrichtung.

In der Offenlegungsschrift DE 10 2013 105 161 A1 wird eine Pflegevorrichtung für einen Getränkeautomaten sowie ein dazugehöriges Verfahren gezeigt.

In der Gebrauchsmusterschrift DE 20 2008 010 049 U1 ist eine Wasserbehandlungsvorrichtung beschrieben.

Die Gebrauchsmusterschrift DE 20 2008 001 481 U1 zeigt eine Anordnung zum Reinigen von Wasser.

Die genannten Darreichungsformen der Reinigungsmittel haben allerdings deutliche Nachteile. So ist insbesondere bei den flüssigen Reinigungsmitteln die Dosierung schwierig, da eine zu hohe Konzentration zu einer Korrosion der zu reinigenden Teile der Maschine führt, eine zu niedrige Konzentration aber eine nur unzureichende Reinigung zur Folge hat.

Liegt das Reinigungsmittel dagegen in Form einer Tablette vor, ist die Dosierung in der Regel zwar einfacher, da je nach Maschinentyp und verwendetem Reinigungsprogramm beispielsweise eine bestimmte Menge Wasser zu einer Tablette zugegeben wird oder die Tablette in einen Teil des Automaten eingeführt und durch das Ablaufen eines Programms automatisch mit der entsprechenden Wassermenge aufgelöst wird. Auch bei der Verwendung einer Reinigungskapsel in einer Kapselmaschine erfolgt die Wasserzufuhr automatisch, so dass durch die entsprechende Menge Reinigungsmittel in der Kapsel sich die zur Reinigung benötigte Konzentration des Reinigers in der Flüssigkeit automatisch einstellt.

Trotz dieser offensichtlichen Vorteile von Reinigern in Tablettenform gegenüber flüssigen Reinigern bestehen auch hier deutliche Nachteile. Beispielsweise werden die Tabletten von Hand in den Automaten eingelegt, so dass direkter Kontakt zum Reinigungsmittel besteht. Auch die Entnahme der Reinigungskapsel nach der Reinigung erfolgt in der Regel von Hand, so dass auch hier direkter Hautkontakt zum Reiniger besteht. Dies ist umso kritischer zu sehen, als es sich bei den Reinigern in der Regel um Säuren und/oder Laugen handelt, aber auch um Tenside oder Netzmittel, Komplexbildner sowie oxidativ wirksame Stoffe. Diese aggressiven Mittel sind zu einer gründlichen Reinigung, die insbesondere im Gastronomiebereich aufgrund strenger Hygienevorschriften notwendig sind, zwar unabdingbar, bergen jedoch das Risiko schwerer Gesundheitsschäden wie beispielweise Verätzungen von Haut und/oder Schleimhaut, weswegen solche Reiniger oft mit umfangreichen Warnhinweisen versehen sind. Besonders effektive, aber eben auch besonders aggressive Reinigungsmittel wie beispielsweise Chlor kommen aus diesen Gründen in der Regel nicht zum Einsatz.

Es besteht somit ein Bedarf an verbesserten Vorrichtungen zur Reinigung von Automaten zur Heißgetränkeherstellung.

### Aufgabe der Erfindung

Die Erfindung hat zur Aufgabe, ein Verfahren zur effizienten und gründlichen Reinigung von Automaten zur Herstellung von Heißgetränken bereitzustellen, welches die genannten Schwächen des Standes der Technik mildert und universell einsetzbar ist.

In einem weiteren Aspekt der Erfindung wird ein Automat zur Heißgetränkeherstellung bereitgestellt, mit welchem das Verfahren zur Reinigung durchführbar ist.

### Zusammenfassung der Erfindung

Die Aufgabe wird durch ein Verfahren nach Anspruch 1, sowie einen Automaten zur Heißgetränkeherstellung nach Anspruch 3 gelöst .

Das Verfahren zur Reinigung eines Automaten zur Heißgetränkeherstellung ist dadurch gekennzeichnet, dass eine Reinigungsmittel enthaltende Kartusche an die Zufuhr mindestens einer Flüssigkeit zur Heißgetränkeherstellung angeschlossen ist und ein Programm zur Reinigung über ein Auswahlmenü des Automaten gestartet wird. Dabei wird das Reinigungsmittel aus der Kartusche in den Automaten gesaugt und eine verbrauchte Kartusche zur Wasserenthärtung nach Aufforderung des Automaten gegen eine Reinigungsmittel enthaltende Kartusche ausgetauscht. Anschließend wird über ein Auswahlmenü des Automaten zur Heißgetränkeherstellung ein Reinigungsprogramm gestartet. Dabei wird das Reinigungsmittel aus der Kartusche in den Automaten eingesaugt und in die zu reinigenden Teile des Automaten geleitet, wobei nach abgeschlossener Reinigung erneut eine Kartusche zur Wasserenthärtung in den Automaten eingesetzt wird.

Bevorzugt ist die Reinigung eine Entkalkung und/oder eine Entfettung und/oder eine Reinigung des Milchsystems des Automaten.

Der Automat zur Herstellung von Heißgetränken, bei dem ein Reinigungsprogramm gestartet werden kann, ist mit einer Reinigungsmittel enthaltenden Kartusche ausgerüstet, wobei die Kartusche an die Zufuhr mindestens einer Flüssigkeit zur Heißgetränkeherstellung anschließbar ist. Der Automat weist Mittel auf, um die Erschöpfung einer Kartusche zur Wasserenthärtung zu erkennen, und fordert bei einer solcherart erkannten Erschöpfung der Kartusche zum Austausch der Kartusche zur Wasserenthärtung gegen eine Reinigungsmittel enthaltende Kartusche auf. Zusätzlich verfügt er über ein Programm, das einen Reinigungszyklus, bei dem in mindestens eine Flüssigkeitszufuhr des Automaten eine Kartusche, die Reinigungsmittel beinhaltet und auch als Beutel ausgebildet sein kann, eingebracht worden ist, startet. Das Starten des Reinigungsprogramms erfolgt dabei über ein Auswahlmenü des Automaten zur Herstellung von Heißgetränken.

Der Automat weist mithin Mittel auf, um den Erschöpfungszeitpunkt einer Kartusche zur Wasserenthärtung zu berechnen. Die Berechnung der Erschöpfung der Kartusche zur Wasserenthärtung kann beispielsweise zeitbasiert und/oder auf Basis der durch die Kartusche geleiteten Wassermenge erfolgen. Die ungefähre Bestimmung der Wassermenge ist bei elektronisch gesteuerten Automaten auf Basis der Anzahl der entnommenen Getränke oder auf Basis der Betriebszeit einer Pumpe zum Fördern von Wasser durch den Automaten einfach möglich.

Der notwendige Austausch der Kartusche zur Wasserenthärtung wird sodann über eine Anzeigeeinrichtung signalisiert, wobei gemäß einer Ausführungsform der Erfindung der Automat Mittel aufweist, um die notwendige Verwendung einer Kartusche mit dem Reinigungsmittel zu signalisieren.

Die Kartusche mit dem Reinigungsmittel wird mithin immer dann verwendet, wenn ohnehin die Kartusche zur Wasserenthärtung ausgetauscht wird. Dies ist für den Benutzer komfortabel, da ohnehin ein manueller Wartungsvorgang durchgeführt werden muss.

Es ist dabei nicht zwingend notwendig, dass bei jedem Austausch der Kartusche zur Wasserenthärtung eine Kartusche mit Reinigungsmittel eingesetzt und verwendet wird. Vielmehr ist es denkbar, beispielsweise erst bei jedem zweiten oder jedem dritten Austausch eine Reinigung mittels der Kartusche mit dem Reinigungsmittel zwischenzustellen.

Der Automat weist mithin gemäß einer Ausführungsform ebenfalls Mittel auf, den Reinigungszeitpunkt anzuzeigen. Beispielhaft kann dies ebenfalls zeitbasiert erfolgen, aber auch eine Berechnung des Reinigungszeitpunktes aufgrund der durch den Automaten geleiteten Flüssigkeiten ist denkbar. Beispielsweise ist der Automat gemäß einer bevorzugten Ausführungsform so ausgerüstet, dass er aufgrund der Anzahl der entnommenen milchhaltigen Getränke Mittel aufweist, die Notwendigkeit einer Reinigung des Milchsystems zu erkennen, und dies entsprechend anzeigt. Gemäß einer weiteren Ausführungsform ist der Automat so ausgestaltet, dass er aufgrund der Anzahl der entnommenen Kaffeegetränke den Zeitpunkt der Entfettung signalisiert. Gemäß einer nochmals weiteren Ausführungsform wird ebenfalls auf Basis der Anzahl der entnommenen Getränke die Notwendigkeit einer Entkalkung angezeigt.

Selbstverständlich ist auch eine Kombination eines zeitbasierten mit einem auf Basis der Wassermenge eingestellten Reinigungszyklus möglich. Beispielsweise kann der Automat über ein informatisches Mittel verfügen, welches so eingestellt ist, dass entweder eine Aufforderung zur Reinigung erfolgt, weil eine bestimmte Zeit (beispielhaft 60 Tage) abgelaufen ist oder weil eine bestimmte Menge und Art von Getränken entnommen wurde, wobei derjenige Zeitpunkt maßgeblich ist, welcher zuerst eintritt. So wird in der Regel bei vielgenutzten Automaten, beispielsweise bei gewerblich genutzten Geräten, eine entnahmebasierte Reinigungsaufforderung ergehen, wohingegen bei wenig benutzten Automaten, zum Beispiel im privaten Bereich, auch eine zeitbasierte Aufforderung ergehen kann.

Im Rahmen dieser Erfindung wird als Kartusche ein Behälter bezeichnet, der über mindestens einen Ablauf verfügt und in die Zufuhr mindestens einer Flüssigkeit des Automaten zur Heißgetränkeherstellung eingebracht werden kann. Dabei kann die Kartusche direkt in den Tank bzw. Wasser- und/oder Milchbehälter des Automaten zur Heißgetränkeherstellung oder auch außerhalb des Automaten in eine externe Zuleitung eingesetzt werden. Bevorzugt ist die Kartusche als Beutel ausgebildet. Als Beutel wird dabei im Rahmen der vorliegenden Erfindung ein Behälter verstanden, bei welchem die Wandungen flexibel ausgebildet sind. Insbesondere bestehen die Wandungen des Beutels aus einer flexiblen Folie.

Das Reinigungsmittel ist dabei derart in der Kartusche eingeschlossen, dass der Hautkontakt vollständig unterbunden wird. Insbesondere ist die Wandung der Kartusche so ausgebildet, dass sie gegenüber dem Durchtritt des Reinigungsmittels undurchlässig ist. Beispielsweise kann die Wandung eines Beutels aus einem flexiblen, undurchlässigen Kunststoff ausgebildet sein. Dies ist insbesondere deswegen von Vorteil, da die eingesetzten Reinigungsmittel üblicherweise ätzend bzw. reizend wirken. Auf besonders aggressive Reinigungsmittel, die zu einer besonders gründlichen Reinigung führen, muss daher bei herkömmlichen Reinigern für Automaten zur Herstellung von Heißgetränken, die von Hand beispielsweise in Form einer Tablette oder als flüssiger Reiniger zugegeben werden, aufgrund der Verletzungsgefahr für den Bediener verzichtet werden. Da der Hautkontakt im Falle der Reinigungsmittel enthaltenden Kartusche allerdings unterbleibt, sind auf diese Weise auch aggressivere Reinigungsmittel einsetzbar.

In einer Ausführungsform der Erfindung ist die Kartusche zusätzlich mit mindestens einem Ventil versehen, durch das Wasser zum in der Vorrichtung befindlichen Reinigungsmittel leitbar ist.

In einer weiteren Ausführungsform der Erfindung beinhaltet die Kartusche zur Reinigung eines Automaten zur Heißgetränkeherstellung zwei Ventile, wobei durch das eine Ventil die Flüssigkeitszufuhr in die Kartusche, durch das andere Ventil die Zufuhr des in Wasser gelösten Reinigungsmittels in die zu reinigenden Teile der Maschine erfolgt.

Die Ausstattung der Reinigungsmittel enthaltenden Kartusche mit mindestens einem Ventil ist dabei insbesondere vor dem Hintergrund der Bedienersicherheit sinnvoll, da auf diese Weise ein zusätzlicher Abschluss des Reinigungsmittels vom Bediener erzielt wird. Eine nochmals erhöhte Bedienersicherheit wird mit dem Vorliegen von zwei Ventilen erreicht.

In einer bevorzugten Ausführungsform der Erfindung handelt es sich bei dem mindestens einen Ventil um ein Membranventil. Durch die Ausführung des mindestens einen Ventils als Membranventil wird sichergestellt, dass das in der Kartusche befindliche Reinigungsmittel möglichst vollständig restentleert wird und die für eine gründliche Reinigung notwendige Dosierung des Reinigungsmittels während des Ablaufs des Reinigungsprogramms vorliegt.

In einer weiteren Ausführungsform der Erfindung ist die Kartusche in den Tank des Automaten zur Herstellung von Heißgetränken eingebracht.

Das Reinigungsmittel kann in der Kartusche zur Reinigung dabei in unterschiedlichen Formen vorliegen. Möglich ist das Vorliegen als Pulver oder Granulat, in Tablettenform oder auch flüssig.

Bevorzugt enthält das Reinigungsmittel Stoffe, die ihre Reinigungswirkung über Säure-Base-Reaktionen und/oder Oxidations-Reduktions-Reaktionen entfalten, und/oder Tenside und/oder oberflächenaktive Substanzen und/oder Farbstoffe. Bei diesen Stoffen kann es sich beispielsweise, aber nicht ausschließlich, um Natrium- und/oder KaliumSalze von Säuren und/oder Laugen halten, wie z.B. Natriumhydrogencarbonat, Natriumcarbonat oder Natriumcitrat, um Säuren wie Apfelsäure, Maleinsäure, Amidosulfonsäure oder Zitronensäure, um Laugen wie KOH und/oder um Netzmittel wie beispielsweise Natrium-Lauryl-Sulfoacetat. Durch die Vermeidung des direkten Hautkontaktes mit dem Bediener ist dabei auch der Einsatz sehr aggressiver Mittel wie beispielsweise von Chlor möglich, was insbesondere im Gastronomiebereich eine besonders hygienische Reinigung ermöglicht.

Zur weiteren Erhöhung der Bedienersicherheit enthält das Reinigungsmittel auch Farbstoffe, die die im Verlaufe der Reinigung aus dem Automaten austretende Flüssigkeit farblich kennzeichnet.

In einer Ausführungsform der Erfindung weist der Automat zur Heißgetränkeherstellung Mittel auf, um das in der Vorrichtung befindliche Reinigungsmittel in das Innere des Automaten zu saugen.

In einer bevorzugten Ausführungsform liegt die Kartusche als Beutel vor, bei dem ein im Beutel befindliches flüssiges Reinigungsmittel in das Innere des Automaten zur Heißgetränkeherstellung gesaugt werden kann.

Beim Verfahren zur Reinigung kann es sich dabei um eine Entkalkung und/oder eine Entfettung, beispielsweise eine Entfettung der Brüheinheit, und/oder eine Reinigung des Milchsystems handeln.

Die Reinigung des Automaten zur Heißgetränkeherstellung wird über ein Auswahlmenü des Automaten gestartet, wobei zwischen einem Reinigungsprogramm mit oder ohne Kartusche gewählt werden kann, und das Reinigungsmittel nach dem Starten des Reinigungsprogramms in den Automaten eingesaugt und in die zu reinigenden Teile des Automaten geleitet wird. Nach erfolgter Reinigung wird auf eine entsprechende Aufforderung des Automaten erneut eine Kartusche zur Wasserenthärtung eingesetzt.

Gemäß der Erfindung ist eine Kartusche vorgesehen, welche sowohl ein Reinigungsmittel im Sinne der Erfindung als auch ein Mittel zur Wasserenthärtung, wie beispielsweise ein schwach saures Ionenaustauschermaterial enthält.

Eine derartige Kartusche verfügt insbesondere über eine erste Kammer, in welcher sich das Reinigungsmittel befindet, sowie über eine zweite Kammer, welche mit dem Ionenaustauschermaterial befüllt ist.

Wird nun eine neue Kartusche eingesetzt, entleert sich anfangs die Kammer mit dem Reinigungsmittel und führt so automatisch einen Reinigungsvorgang durch. Vorzugsweise ist der Automat derart ausgebildet, dass dieser bei einem Austausch der Kartusche, welche sowohl ein Reinigungsmittel als auch ein Ionenaustauschermaterial enthält, ein Reinigungsprogramm startet. Die Kammer mit dem Reinigungsmittel wird während dieses Reinigungsprogramms entleert und im Anschluss ist der Automat wieder betriebsfähig.

Zwischen der ersten und der zweiten Kammer ist vorzugsweise ein Ventil vorhanden, welches verhindert, dass

Reinigungsmittel beispielsweise während des Transports in die Kammer mit dem Ionenaustauschermaterial eindringt. Dies gilt insbesondere bei Verwendung eines flüssigen Reinigungsmittels.

### Beschreibung der Zeichnungen

Fig. 1 zeigt eine schematische Darstellung eines Automaten für die Herstellung von Heißgetränken.

Die Fig. 2 bis 9 zeigen schematische Darstellung eines Tanks für einen Automaten zur Heißgetränkeherstellung mit einer Reinigungsmittel enthaltenden Kartusche in jeweils unterschiedlichen Ausführungsformen.

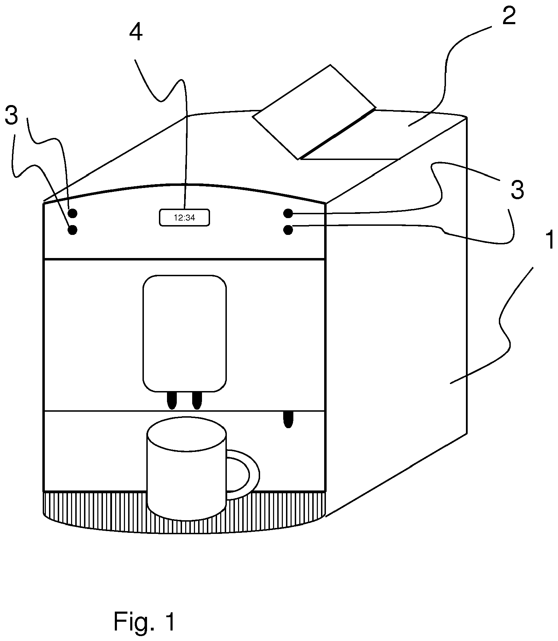

Fig. 1 zeigt eine schematische Darstellung eines erfindungsgemäßen Automaten für die Herstellung von Heißgetränken 1. Ebenfalls schematisch dargestellt ist die Lage des Wassertanks 2, hier mit geöffnetem Deckel. Weiterhin zu sehen sind Bedienelemente 3, beispielhaft dargestellt in Form von Knöpfen, wobei jedoch je nach genauem Design des Automaten auch andere Ausgestaltungsformen möglich sind, beispielweise Bedienelemente in Form von Tasten, das Vorliegen eines Bedienelementes in Form eines Drehknopfes oder Kombinationen aus den genannten Ausgestaltungen der Bedienelemente 3, sowie ein elektrooptisches Anzeigeelement 4 (z.B. Display), auf dem mittels des oder der Bedienelemente 3 unterschiedliche Programme zur Heißgetränkherstellung und/oder sonstigen Bedienung und Wartung des Automaten zur Heißgetränkeherstellung 1 eingestellt werden können. Dabei sind unterschiedliche Reinigungsprogramme auswählbar, insbesondere besteht die Wahl zwischen einem Reinigungsprogramm mit einer Reinigungsmitte enthaltenden Kartusche und einem herkömmlichen Reinigungsprogramm ohne Reinigungskartusche.

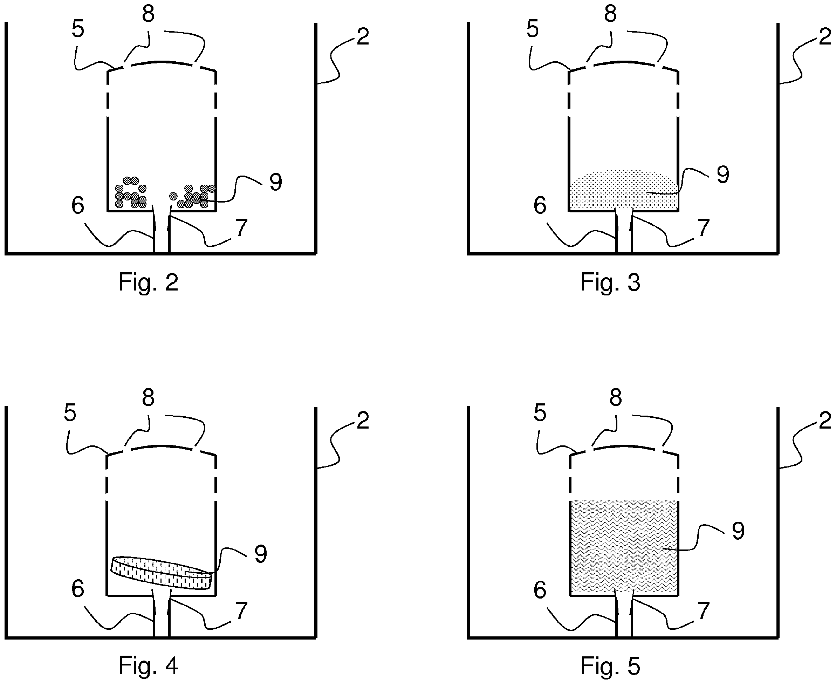

Fig.2 zeigt schematisch die Darstellung eines Wassertanks 2, der sich in einem Automaten für die Herstellung von Heißgetränken befinden oder auch abnehmbar sein kann, zusammen mit einer erfindungsgemäßen Kartusche 5. Die Kartusche 5 ist im Wassertank 2 dergestalt positioniert, dass der Auslauf 7 der Kartusche 5 im Wassereinlauf 6 des Tanks 2 positioniert ist. Die Wasserzufuhr in die Kartusche erfolgt mittels eines oder mehrerer Einläufe 8, die schematisch als Öffnungen in der Kartusche 5 dargestellt sind. Zur besseren Übersichtlichkeit der Darstellung wurden dabei nicht alle Einläufe bezeichnet. In der Kartusche 5 befindet sich das Reinigungsmittel 9, in diesem Beispiel in Form eines Granulats.
Fig. 3 zeigt ebenfalls die schematische Darstellung des Wassertanks 2 mit einer erfindungsgemäßen Kartusche 5, die in ihrer Ausgestaltung im Wesentlichen derjenigen aus Fig. 2 entspricht. Im Unterschied zu Fig. 2 ist hier das Reinigungsmittel 9 in Form eines Pulvers ausgebildet.
Fig. 4 zeigt ebenfalls die schematische Darstellung des Wassertanks 2 mit einer erfindungsgemäßen Kartusche 5, die in ihrer Ausgestaltung im Wesentlichen derjenigen aus Fig. 2 entspricht. Im Unterschied zu Fig. 2 ist hier das Reinigungsmittel 9 in Form einer Tablette ausgebildet.
Fig. 5 zeigt ebenfalls die schematische Darstellung des Wassertanks 2 mit einer erfindungsgemäßen Kartusche 5 entsprechend der Fig. 2, wobei das Reinigungsmittel 9 in diesem Fall in Form einer Flüssigkeit vorliegt. Bei dieser Flüssigkeit kann es sich um die gelöste Form eines Pulvers, Granulats oder einer Tablette handeln, wie sie beispielhaft in den vorangehenden Fig. 2 bis 4 dargestellt sind; das Reinigungsmittel 9 kann aber auch direkt in flüssiger Form vorliegen.

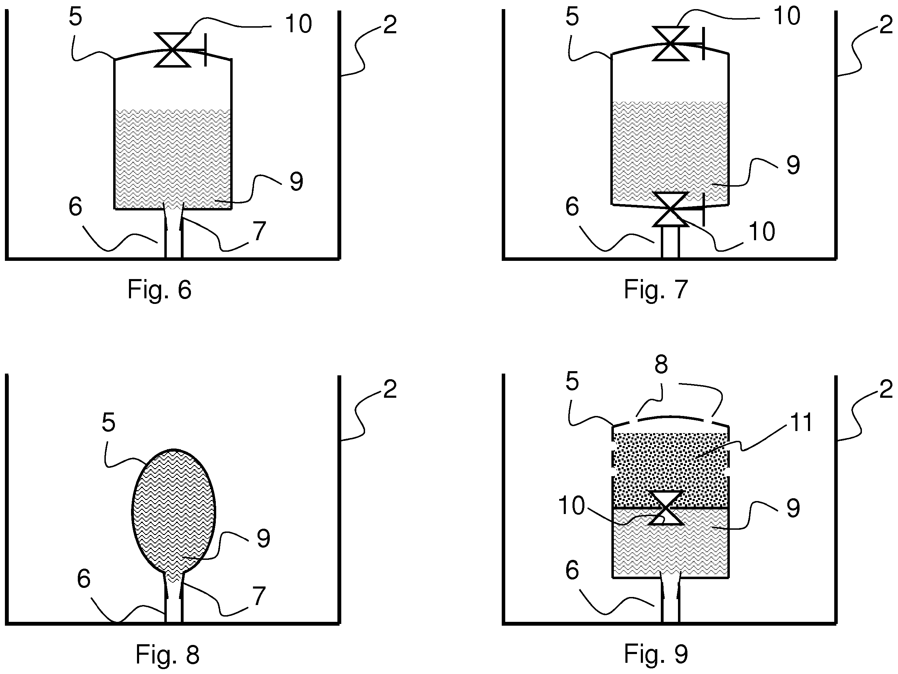

In Fig. 6 ist beispielhaft eine Kartusche 5 in einem Wassertank 2 dargestellt, wobei hier der Zulauf des Wassers in die Kartusche 5 über ein Ventil 10 in Einlauf 8 (nicht dargestellt) eingestellt wird. Das Reinigungsmittel 9 kann grundsätzlich sowohl als Pulver, als Granulat, in Tablettenform als auch flüssig vorliegen, ist hier jedoch beispielhaft in flüssiger Form dargestellt.
In Fig. 7 ist schematisch die Darstellung einer Kartusche 5, beinhaltend ein Reinigungsmittel 9, beispielhaft dargestellt in flüssiger Form, in einem Wassertank 2 dargestellt, wobei hier sowohl die Zufuhr des Wassers in die Kartusche 5 über ein Ventil 10 in Einlauf 8 (nicht dargestellt) erfolgt als auch der Auslauf 7 (nicht dargestellt) um ein Ventil 10 ergänzt wurde.
Fig. 8 zeigte eine weitere Form einer erfindungsgemäßen Kartusche 5, die hier in Form eines Beutels ausgebildet ist. In diesem Beutel, der beispielsweise aus einem elastischen Kunststoffmaterial gebildet sein kann, befindet sich das Reinigungsmittel 9. Beim Start eines Reinigungsprogramms wird das Reinigungsmittel aus der Kartusche 5 in den Automaten eingesaugt.
Fig. 9 zeigt eine weitere Ausführungsform der Erfindung, bei welcher eine Kartusche 5 in einen Wassertank 2 eingesetzt ist, welche sowohl ein Reinigungsmittel 9 als auch ein Ionenaustauschermaterial 11 enthält.

Die Kartusche 5 ist in zwei Kammern unterteilt, wobei eine Kammer mit einem Reinigungsmittel 9 und die andere Kammer mit einem Ionenaustauschermaterial 11 gefüllt ist.

Das Reinigungsmittel 9 befindet sich von der Strömung gesehen auf der Seite des Wassereinlaufs des Tanks 6.

Die Kammer mit dem Ionenaustauschermaterial, etwa mit einem schwach sauren Ionenaustauscherharz, weist zumindest einen Einlauf 8 auf.

Zwischen der Kammer mit dem Ionenaustauschermaterial 11 und der Kammer mit dem Reinigungsmittel 9 kann sich ein Ventil 10 befinden, welches verhindert, dass Reinigungsmittel etwa beim Transport in die Kammer mit dem Ionenaustauschermaterial 11 austritt. Bei dem Ventil 10 kann es sich beispielsweise um ein Membranventil handeln.

Wird nun eine derartige Kartusche in einen Automat zur Herstellung von Heißgetränken eingesetzt, so wird vorzugsweise zunächst ein Reinigungsprogramm gestartet.

Der Automat saugt über den Wassereinlauf 6 Wasser ein. Das Wasser tritt über den zumindest einen Einlauf 8 in die Kartusche, passiert das Ionenaustauschermaterial 11 und läuft über das Ventil 10 in die Kammer mit dem Einigungsmittel 9, wodurch das Wasser das Reinigungsmittel verdrängt, mithin das Reinigungsmittel zuerst aus der Kartusche gesaugt wird.

Nach dem Durchführen eines Reinigungsprogramms ist die Kammer mit dem Reinigungsmittel 9 entleert und die Kartusche dient sodann allein der Wasseraufbereitung über das Ionenaustauschermaterial 11.

Durch die Erfindung konnte auf einfache Weise die Reinigung von Kaffeevollautomaten verbessert werden.

### Bezugszeichenliste

- 1 -: Automat zur Herstellung von Heißgetränken
- 2 -: Wassertank
- 3 -: Bedienelement zur Menüauswahl
- 4 -: Elektrooptisches Anzeigeelement (z.B. Display)
- 5 -: Kartusche
- 6 -: Wassereinlauf des Tanks
- 7 -: Auslauf der Kartusche
- 8 -: Einlauf der Kartusche
- 9 -: Reinigungsmittel
- 10 -: Ventil
- 11 -: Ionenaustauschermaterial

## Patentansprüche

1. Verfahren zur Reinigung eines Automaten zur Heißgetränkeherstellung (1), wobei eine Reinigungsmittel (9) enthaltende Kartusche (5) an die Zufuhr mindestens einer Flüssigkeit zur Heißgetränkeherstellung angeschlossen wird und ein Programm zur Reinigung über ein Auswahlmenü des Automaten (1) gestartet wird, wobei das Reinigungsmittel (9) aus der Kartusche (5) in den Automaten (1) gesaugt wird , **dadurch gekennzeichnet, dass** eine verbrauchte Kartusche zur Wasserenthärtung nach Aufforderung des Automaten gegen ein Reinigungsmittel (9) enthaltende Kartusche (5) ausgetauscht und anschließend über ein Auswahlmenü des Automaten zur Heißgetränkeherstellung (1) ein Reinigungsprogramm gestartet wird, wobei das Reinigungsmittel (9) aus der Kartusche (5) in den Automaten (1) eingesaugt und in die zu reinigenden Teile des Automaten (1) geleitet wird, wobei nach abgeschlossener Reinigung erneut eine Kartusche zur Wasserenthärtung in den Automaten eingesetzt wird.

2. Verfahren zur Reinigung eines Automaten zur Heißgetränkeherstellung (1) nach Anspruch 1, **dadurch gekennzeichnet, dass** die Reinigung eine Entkalkung und/oder eine Entfettung und/oder eine Reinigung des Milchsystems des Automaten ist.

3. Automat zur Herstellung von Heißgetränken (1), bei dem ein Reinigungsprogramm gestartet werden kann, ausgerüstet mit einer Reinigungsmittel (9) enthaltenden Kartusche (5), wobei die Kartusche (5) an die Zufuhr mindestens einer Flüssigkeit zur Heißgetränkebereitung anschließbar ist, Z **dadurch gekennzeichnet, dass** der Automat (1) Mittel aufweist, um die Erschöpfung einer Kartusche zur Wasserenthärtung zu erkennen und Z um bei einer solcherart erkannten Erschöpfung zum Austausch der Kartusche zur Wasserenthärtung gegen eine Reinigungsmittel (9) enthaltende Kartusche (5) aufzufordern.

4. Automat zur Herstellung von Heißgetränken (1) nach Anspruch 3, **dadurch gekennzeichnet, dass** die Kartusche (5) mindestens ein Ventil (10) aufweist, über das Wasser in die Kartusche leitbar ist.

5. Automat zur Herstellung von Heißgetränken (1) nach Anspruch 4, **dadurch gekennzeichnet, dass** das mindestens eine Ventil (10) als Membranventil ausgebildet ist.

6. Automat zur Herstellung von Heißgetränken (1) nach einem der Ansprüche 3 bis 5, **dadurch gekennzeichnet, dass** die Reinigungsmittel (9) enthaltende Kartusche (5) in den Tank (2) eingebracht ist.

7. Automat zur Herstellung von Heißgetränken (1) nach einem der Ansprüche 3 bis 6, **dadurch gekennzeichnet, dass** das Reinigungsmittel (9) Stoffe, die ihre Reinigungswirkung über Säure-Base-Reaktionen und/oder Oxidations-Reduktions-Reaktionen entfalten, und/oder Tenside und/oder oberflächenaktive Substanzen und/oder Farbstoffe beinhaltet.

8. Automat zur Herstellung von Heißgetränken (1) nach einem der Ansprüche 3 bis 7, **dadurch gekennzeichnet, dass** der Automat (1) Mittel aufweist, ein Programm zur starten, bei dem Reinigungsmittel (9) in das Innere des Automaten (1) eingesaugt werden.

## Claims

1. A method for cleaning a vending machine for producing hot beverages (1), wherein a cartridge (5) containing a cleaning agent (9) is connected to the feed of at least one liquid for producing hot beverages and a program for cleaning is started via a selection menu of the vending machine (1), wherein the cleaning agent (9) is sucked out of the cartridge (5) into the vending machine (1), **characterized in that** a depleted cartridge for water softening is replaced with a cartridge (5) containing a cleaning agent (9) when prompted by the vending machine, and a cleaning program is subsequently started via a selection menu of the vending machine for producing hot beverages (1), wherein the cleaning agent (9) is sucked out of the cartridge (5) into the vending machine (1) and is guided into the parts of the vending machine (1), which are to be cleaned, wherein a cartridge for water softening is inserted into the vending machine again after cleaning is completed.

2. The method for cleaning a vending machine for producing hot beverages (1) according to claim 1, **characterized in that** the cleaning is a decalcification and/or a degreasing and/or a cleaning of the milk system of the vending machine.

3. A vending machine for producing hot beverages (1), in the case of which a cleaning program can be started, equipped with a cartridge (5) containing a cleaning agent (9), wherein the cartridge (5) can be connected to the feed of at least one liquid for producing hot beverages, **characterized in that** the vending machine (1) has means for detecting the depletion of a cartridge for water softening and for prompting the replacement of the cartridge for water softening with a cartridge (5) containing a cleaning agent (9) in the event of a detected depletion of this kind.

4. The vending machine for producing hot beverages (1) according to claim 3, **characterized in that** the cartridge (5) has at least one valve (10), via which water can be guided into the cartridge.

5. The vending machine for producing hot beverages (1) according to claim 4, **characterized in that** the at least one valve (10) is formed as membrane valve.

6. The vending machine for producing hot beverages (1) according to any one of claims 3 to 5, **characterized in that** the cartridge (5) containing cleaning agent (9) is introduced into the tank (2).

7. The vending machine for producing hot beverages (1) according to any one of claims 3 to 6, **characterized in that** the cleaning agent (9) contains substances, which display their cleaning effect via acid-base reactions and/or oxidation-reduction reactions, and/or which contain surfactants and/or surface-active substances and/or dyes.

8. The vending machine for producing hot beverages (1) according to any one of claims 3 to 7, **characterized in that** the vending machine (1) has means for starting a program, in the case of which cleaning agent (9) can be sucked into the interior of the vending machine (1).

## Revendications

1. Procédé de nettoyage d'un distributeur automatique pour la préparation de boissons chaudes (1),
une cartouche (5) contenant un produit nettoyant (9), étant reliée à l'alimentation au moins d'un liquide pour la préparation de boissons chaudes et un programme pour le nettoyage étant lancé à l'aide d'un menu de sélection du distributeur automatique (1), le produit nettoyant (9) étant aspiré de la cartouche (5) dans le distributeur automatique (1), **caractérisé en ce qu'**une cartouche d'adoucissement de l'eau usagée est remplacée par une cartouche (5) contenant un produit nettoyant (9) après une demande du distributeur automatique, puis un programme de nettoyage est lancé à l'aide d'un menu de sélection du distributeur automatique pour la préparation de boissons chaudes (1), le produit nettoyant (9) étant aspiré de la cartouche (5) dans le distributeur automatique (1) et acheminé dans les pièces à nettoyer du distributeur automatique (1), une cartouche d'adoucissement de l'eau étant à nouveau introduite dans le distributeur automatique une fois que le nettoyage est terminé.

2. Procédé de nettoyage d'un distributeur automatique pour la préparation de boissons chaudes (1) selon la revendication 1, **caractérisé en ce que** le nettoyage est un détartrage et/ou un dégraissage et/ou un nettoyage du système de préparation du lait du distributeur automatique.

3. Distributeur automatique pour la préparation de boissons chaudes (1), dans lequel un programme de nettoyage peut être lancé et qui est équipé d'une cartouche (5) contenant un produit nettoyant (9), la cartouche (5) pouvant être reliée à l'alimentation au moins d'un liquide pour la préparation de boissons chaudes, **caractérisé en ce que** le distributeur automatique (1) présente des moyens permettant de détecter l'épuisement d'une cartouche d'adoucissement de l'eau et de demander, dans le cas d'un tel épuisement détecté, le remplacement de la cartouche d'adoucissement de l'eau par une cartouche (5) contenant un produit nettoyant (9).

4. Distributeur automatique pour la préparation de boissons chaudes (1), selon la revendication 3, **caractérisé en ce que** la cartouche (5) présente au moins une vanne (10) par laquelle de l'eau peut être acheminée dans la cartouche.

5. Distributeur automatique pour la préparation de boissons chaudes (1), selon la revendication 4, **caractérisé en ce qu'**au moins la vanne (10) est conçue comme vanne à membrane.

6. Distributeur automatique pour la préparation de boissons chaudes (1), selon l'une des revendications 3 à 5, **caractérisé en ce que** la cartouche (5) contenant un produit nettoyant (9) est mise en place dans le réservoir (2) .

7. Distributeur automatique pour la préparation de boissons chaudes (1), selon l'une des revendications 3 à 6, **caractérisé en ce que** le produit nettoyant (9) contient des substances, qui déploient leur action nettoyante par des réactions acide-base et/ou des réactions d'oxydoréduction, et/ou des tensioactifs et/ou des substances tensioactives et/ou des agents colorants.

8. Distributeur automatique pour la préparation de boissons chaudes (1), selon l'une des revendications 3 à 7, **caractérisé en ce que** le distributeur automatique (1) présente des moyens permettant de lancer un programme dans lequel des produits nettoyants (9) sont aspirés à l'intérieur du distributeur automatique (1).
